# EUROPEAN PATENT APPLICATION

(11) **EP 1 231 751 A2**
(43) Date of publication of application: **14.08.2002**
(21) Application number: 02250462.5
(22) Date of filing: 23.01.2002
(51) Int. Cl.: H04L 25/49

(54) **Flexible video encoding scheme supporting audio and auxiliary information**

(30) Priority: 24.01.2001 US 263792 P; 14.02.2001 US 268840 P; 16.08.2001 US 313157 P; 17.08.2001 US 313441 P; 21.08.2001 US 314137 P; 20.08.2001 US 313610 P; 12.09.2001 US 951289; 12.09.2001 US 951671; 27.12.2001 US 34383; 27.12.2001 US 34414
(71) Applicant: Broadcom Corporation, Irvine, California 92618 (US)
(72) Inventor: Pasqualino, Christopher, Glendora, California 91741 (US); Berard, Richard S, Pasadena, California 91103 (US)
(74) Representative: McLeish, Nicholas Alistair Maxwell

(57) **Abstract**

The present invention relates to a method of encoding video and other data types. The method includes receiving an input. The input data pixel is split into a plurality of components and a data bit is concatenated onto each of the plurality of components. The plurality of components and concatenated bit are DC balanced and communicated to a channel.

## Description

### CROSS REFERENCE TO RELATED APPLICATIONS

This application is related to, and claims benefit of and priority from, Provisional Application No. 60/313,157 dated August 16, 2001, titled "Flexible Video Encoding Scheme Supporting Audio and Auxiliary Information" and Provisional Application No. 60/313,610 dated August 20, 2001, titled "Video Encoding Scheme Supporting The Transport of Audio and Auxiliary Information", the complete subject matter of each of which is incorporated herein by reference in its entirety.

### BACKGROUND OF THE INVENTION

Prior video encoding schemes have incorporated functionality to minimize bit transition, improving the long term DC biasing. One such prior scheme a video encoder encodes video data into 10 bit words as part of a high speed digital interface or connection in accordance with commercial applications utilizing Digital Visual Interface (hereinafter referred to as "DVI") frequently make significant use of existing VESA Computer Display standards. The sequence of timing and video data for particular display resolutions and timing is specified in the VESA Computer Display Monitor Timing standard, Version 1.0, Revision 0.8 dated September 17, 1998, incorporated herein by reference. A recent digital television standard set forth in the CEA-EIA 861 specification for high-speed digital interfaces, is also incorporated herein by reference.

These specifications identify a high-speed digital connection, interface or link for visual data types that are display technology independent. In one example, the interface provides a connection between a computer and its display device. In another example, the interface provides a connection between a set top box and a DTV or HDTV. Such a DVI interface enables content to remain in a lossless digital domain from creation to consumption; remain display technology independent; support plug and play through hot plug detection, and support EDID protocol; and provide digital and analog support in a single connector.

For each word of video data encoded by such prior video encoding schemes, bits 7:0 are selectively complimented, and bit 8 defines the complimenting method. The encoder considers the DC biasing of bits 8:0 and, depending on a computation, bits 7:0 are inverted if inversion improves the long term DC biasing. The encoder then uses bit 9 to indicate the inversion state, i.e., whether bits 7:0 have been inverted.

Next, the 10 bit words are communicated to, and eventually received by, a decoder. For each 10 bit word, the decoder considers bit 9, determining whether the encoder has inverted bits 7:0. If bit 9 indicates that the bits 7:0 have been inverted, the decoder performs its own inversion of bits 7:0 to recapture the original data. The overall result is a video data stream that is generally more DC balanced.

One problem with this prior encoding scheme is that it is not DC balanced while transmitting certain synchronization symbol patterns. Furthermore, DC offsets can build up with certain data patterns.

Further limitations and disadvantages of conventional, traditional and proposed approaches will become apparent to one of skill in the art, through comparison of such systems with the present invention as set forth in the remainder of the present application with reference to the drawings.

### BRIEF SUMMARY OF THE INVENTION

Aspects of the present invention may be found in a method of encoding video. The method comprises first receiving input data. The received data is then split into one or more components. Finally, one or more additional data bits are concatenated onto at least one of the components.

One embodiment of the present invention relates to a method of encoding video. The method comprises concatenating at least one data bit onto at least one component of input data and balancing at least one component and at least one data bit. In this embodiment, it is contemplated that at least one CRC bit, audio data, auxiliary data, status information, or some combination thereof may be concatenated onto at least one component.

Another embodiment of the present invention relates to a method of encoding video comprising registering a received input pixel and splitting the input pixel into a plurality of color components. At least one data bit is concatenated onto the plurality of color components. The color components and the concatenated data bit are then DC balanced and communicated to at least one communication channel.

Other aspects, advantages and novel features of the present invention, as well as details of an illustrated embodiment thereof, will be more fully understood from the following description and drawings, wherein like numerals refer to like parts.

### BRIEF DESCRIPTION OF SEVERAL VIEWS OF THE DRAWINGS

Fig. 1 illustrates a high level flow diagram for an encoding scheme in accordance with one embodiment of the present invention;
Fig. 2 illustrates a detailed flow diagram of an encoding scheme similar to that illustrated in Fig. 1 in accordance with one embodiment of the present invention;
Fig. 3 illustrates a transmit timing diagram for the encoding scheme embodiment illustrated in Figs. 1 and 2;
Fig. 4 illustrates a high level flow diagram of a DC balancing scheme in accordance with one embodiment of the present invention;
Fig. 5 illustrates a detailed flow diagram of a DC balancing scheme similar to that illustrated in Fig. 4 in accordance with one embodiment of the present invention; and
Fig. 6 illustrates a detailed flow diagram of an alternate DC balancing scheme similar to that illustrated in Fig. 5 in accordance with one embodiment of the present invention.

### DETAILED DESCRIPTION OF THE INVENTION

In one embodiment of the present invention, video and audio signals are transmitted according to the DVI 1.0 specification similar to that provided previously. However, in this embodiment the encoding scheme previously disclosed is replaced with the following alternative encoding scheme.

In this embodiment, an 8 → 10 bit ratio similar to that disclosed previously is employed. While an 8 → 10 bit ratio is discussed other ratios, such as 8 → 12 or 8 → 14 for example, are contemplated. The code word may be defined as N + M, where N represents the number of bits in a symbol and M represents additional data or code information. In one embodiment, a code word is comprised of an 8 bit color value (Bits 7:0), a data bit (Bit 8), and an invert indicator bit (Bit 9) used for DC balancing.

In one embodiment of the present invention related to code word definition, the data bit (Bit 8) represents a cyclical redundancy check bit (alternatively referred to as a "CRC bit"). While a CRC bit is discussed, other embodiments of the present invention may use checksum, auxiliary data, parity and other check or data integrity devices. The CRC bit may be computed over all 3 colors of the pixel. The resultant CRC word may be, for example, 2 bits in length. In this embodiment, one CRC bit is placed in each of two channels of DVI (for a DVI interface having two channels). Digital Video, Audio and Auxiliary (alternatively referred to as "DVAAA") is representative of the standard for use in the consumer electronics industry for transmitting high quality, multi-channel audio and auxiliary data over a digital video link. The final available bit location is reserved for a Data Enable (alternatively referred to as "DE") indicator bit.

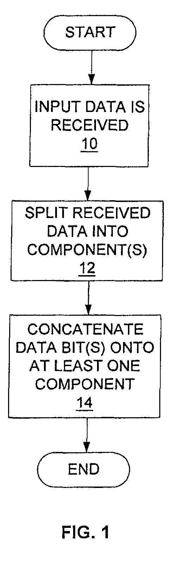

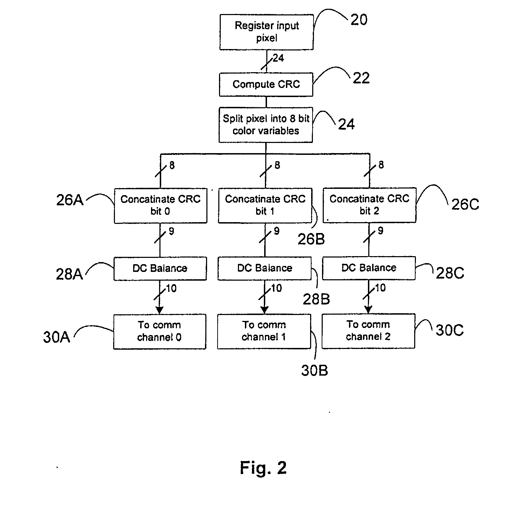

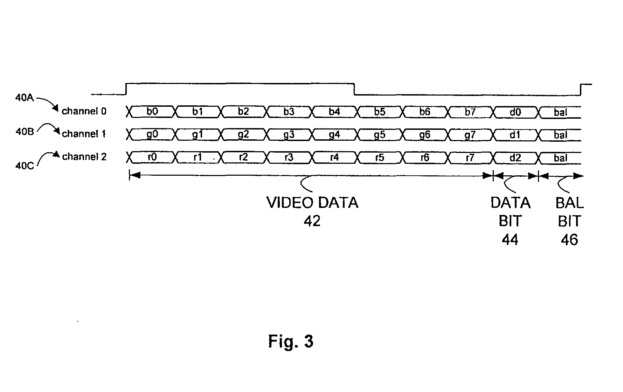

In another embodiment of the present invention, the resultant CRC word is 3 bits in length. In this embodiment, one CRC bit is placed in each of three DVAAA channels (for an interface having three channels). In this embodiment, the state of DE, for example, is determined from the code words being transmitted. Figs. 1 and 2 illustrate flow diagrams for an encoding scheme in accordance with one embodiment of the present invention. Fig. 3 illustrates a transmit timing diagram of an encoding scheme in accordance with one embodiment of the present invention.

CRC transport, as embodied in Figs. 1, 2 and 3, enables detecting most pixel errors, which in turn permits the use of compensation techniques. For example, if a pixel error is detected, compensation may comprise keeping the last pixel value. In other words, the last non-errored pixel (i.e., the last pixel where no error was detected) is retained.

Alternatively, if a pixel error is detected, compensation may comprise taking an average of the adjacent pixels. Adjacent pixels may comprise, for example, those pixels to the left and the right of the errored pixel. Additionally, if desired, adjacent pixels may also comprise those pixels above and below the errored pixel.

Alternatively, if a pixel error is detected, compensation may comprise interpolating between prior and next non-errored pixels. In the event of multiple sequential pixel errors, interpolation may still be performed.

In an alternative embodiment, compensation may comprise some combination of the techniques provided above. For example, compensation may comprise taking an average of the adjacent pixels in some combination with interpolating between prior and next non-errored pixels. Furthermore, such compensation may comprise keeping the last pixel value in some combination with taking the average of adjacent pixels, and interpolating between prior and next non-errored pixels.

It is also contemplated that, in another embodiment of the present invention related to code word definition, the data bit (Bit 8) may be used to transport other data. For example, the databit (Bit 8) may be used to transport digital audio data, status information, auxiliary data, etc.

In yet another embodiment of the present invention related to the code word definition, the length **[of the code word]** may be defined as N + K, where again N represent the number of bits and K may represent one of two numbers defined by Bit 8. For example, K may be defined as '3' when Bit 8 is '0'; or K may be defined as '5' when Bit 8 is '1'. Thus, in the embodiment, the code word length is variable.

Fig. 1 illustrates a high level flow diagram of an encoding scheme in accordance with one embodiment of the present invention. In this embodiment, input data is received as illustrated by block 10. The encoding scheme splits the received data into one or more components as illustrated by block 12. The scheme concatenates one or more data bits onto at least one or more of the components as illustrated by block 14.

Fig. 2 illustrates a flow diagram for an encoding scheme in accordance with one embodiment of the present invention. As illustrated, the encoding scheme registers an input data as illustrated by block 20. For example, the encoding scheme may register one or more input pixel(s) having 24 bits. The encoding scheme then computes CRC for the registered input pixel(s) as illustrated by block 22.

The registered input pixel(s) are split into color variables as illustrated by block 24. In one embodiment, the input pixels are split into 8 bit color variables. One of the 8-bit color variables, blue for example, has a CRC bit concatenated or added thereto as illustrated by block 26A. However other embodiments are contemplated in which digital audio data, status information, auxiliary data, etc, (or some combination if such data) is concatenated onto one more of the components. In the illustrated embodiment, the CRC bit 0 is concatenated to the 8-bit color variable, blue for example, forming a 9-bit word. The 9-bit word is then DC balanced forming a 10-bit word, which is then communicated to comm channel 0 as illustrated by blocks 28A and 30A respectively.

Fig. 2 also illustrates 8-bit color variables, green and red for example, having a data bit, a CRC bit for example, concatenated or added thereto as illustrated by blocks 26B and 26C. The CRC Bit-1 and Bit-2 is concatenated to the 8-bit color variable, green and red for example, forming a 9-bit word. The 9-bit word is then DC balanced forming a 10-bit word as illustrated by blocks 28B and 28C, which is then transmitted to comm channel 1 or 2 as illustrated by blocks 30B and 30C respectively.

Fig. 3 illustrates one embodiment having 10-bit words, which may be transmitted on various channels. For example, in this embodiment, one color variable, blue for example, may be transmitted on comm channel 0 and generally designated 40A. The illustrated 10-bit word comprises video data 42, 8-bit pixel color data, blue for example; one or more data bits 44 concatenated thereto, a CRC bit 0 for example; and a balance bit 46. Likewise, the illustrated embodiment includes such 10-bit words comprising 8-bit color variables, green and red for example, transmitted on comm channels 1 and 2 and generally designated 40B and 40C respectively. In the illustrated embodiment, such 10-bit words comprise the 8-bit pixel color data, green or red for example, a CRC Bit-1 or Bit-2 concatenated thereto, and a DC balanced bit as provided previously.

Typical video streams include blanking periods. For example, the blanking periods may comprise those periods may be defined with code words having lengths that are the same as those used for the transmission of active video data or may be either longer or shorter.

In one embodiment of the present invention, the code words are transmitted during the blanking period as one of 8 possible code words. The presence of these code words on all three channels indicates the presence of a video blanking period. Blanking periods are typically at least 64 pixel clocks long, although it is possible that the blanking periods differ in duration from this number, both up and down. Transmitting these code words in sequence enables symbol synchronization. A code word is selected based upon current DC bias and the values of 2 input bits. Code words that may be used in this embodiment include the following:

| IN[1:0] | Positive Bias blanking period Codeword [MSB:LSB] | Negative Bias blanking period Codeword [MSB:LSB] |
|---|---|---|
| 00 | 0000011111 | 0000011111 |
| 01 | 0000111111 | 0000001111 |
| 10 | 0001111111 | 0000000111 |
| 11 | 0011111111 | 0000000011 |

### The input data bits above may be defined as:

IN[1:0] == [hsync:vsync] for channel 0
IN[1:0] == ctl[1:0] for channel 1
IN[1:0] == ctl[3:2] for channel 2

During the transmission of standard video, steps may be taken to ensure false synchronization does not occur (i.e., blanking periods). One possible embodiment for preventing such false synchronization is to ensure that the first and last or final video pixels are not a blanking codeword. Furthermore, for sequences of more than "z" codewords for example, false synchronization may be prevented by inverting the least significant bit of the code word.

Alternatively, multiple lines may be monitored to verify timing and ensure false synchronization does not occur. This may include monitoring frames of multiple lines or monitoring multiple frames, and extracting timing information as understood by one skilled in the art.

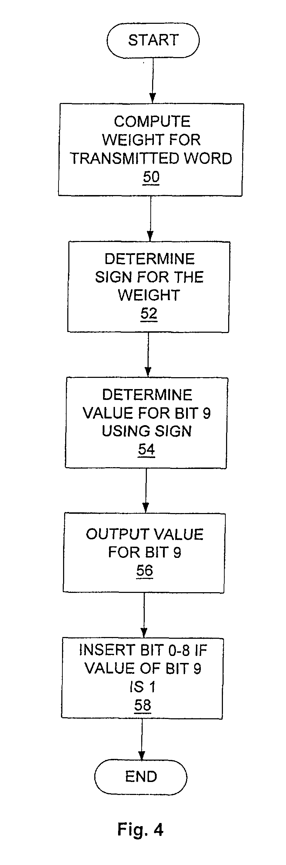

As illustrated in Figs. 4, 5 and 6, DC balancing, in accordance with one embodiment of the present invention, is comprehensive and considers all transmitted bits. For this embodiment, weight W_{S} is defined as the number of ones transmitted less the number of zeros transmitted in a stream. Intermediate symbol weight, W_{I}, is computed in a like manner on the code word currently under construction. W_{P} represents the weight of the previously transmitted DVAAA word. Only 9 bits have been constructed thus far.

Furthermore in this embodiment, a sign of value {X} returns a positive signal (+) if X is greater than or equal to 0 and a negative signal (-) if X is less than 0. For example, Sign(X) is + for X≥0 or - for X<0.

Fig. 4 illustrates a high level flow diagram of a DC balancing scheme in accordance with one embodiment of the present invention. In the illustrated embodiments, the scheme computes the weight for one or more transmitted words as illustrated by block 50. The DC balancing scheme then determines the sign for the weight of the transmitted words as illustrated by block 52, similar to that provided previously.

The DC balancing scheme determines the value for Bit-9 using the sign as illustrated by block 54. The Bit-9 value is output and insert in Bit 0-8 if the value of Bit-9 is 1 as illustrated in blocks 56 and 58 respectively. While the illustrated embodiment is depicted as a simple one-pass process, other embodiments are contemplated in which the DC balancing scheme is a repetitive process, repeatedly determining and outputting the value of Bit-9.

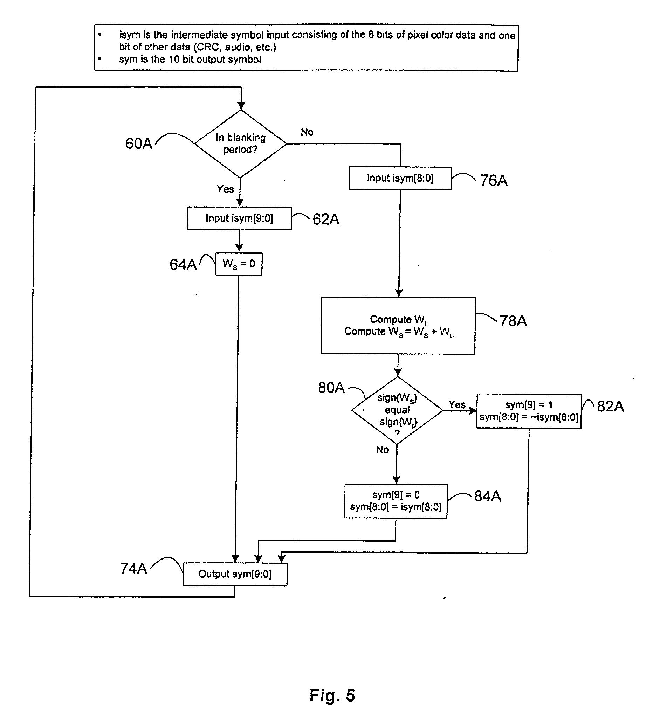

Fig. 5 illustrates a detailed flow diagram of a DC balancing scheme similar to that illustrated in Fig. 4 in accordance with one embodiment of the present invention. In this embodiment, isym represents the intermediate input symbol consisting of 8 bits of pixel color data and one bit of other data, CRC bits, digital audio data, auxiliary information or some combination. The term sym represents the 10 bit output symbol.

In the illustrated embodiment, the DC balancing scheme determines whether a blanking period has been detected as illustrated by diamond 60A. If the blanking period is detected, the isym [9:0] is input into the DC balancing scheme as illustrated by block 62A. The value of the stream weight Wₛ is initialized to 0 and sym[9:0] is output as illustrated by blocks 64A and 74A respectively.

However, if in a blanking period as illustrated by block 60, the isym [8:0] is input into the DC balancing scheme as illustrated by block 76A. The DC balancing scheme then determines or computes W_{I} and uses this value to compute or update W_{S}, where W_{S} = W_{S} + W_{I} as illustrated by block 78A. The DC balancing scheme determines whether Sign{W_{S}} is equal to Sign{W_{I}} as illustrated by diamond 80A. If the signs are equal than sym[9] = 1 and sym [8:0] is the inverse of isym[8:0] as indicated by block 82A. The output sym[9:0] is outputted as illustrated by block 74A. However, if Sign{W_{S}} is not equal to Sign{W_{I}} then sym[9] = 0 and sym[8:0] = isym[8:0] as illustrated in block 84A. Sym[9:0] is outputted as illustrated by block 74A.

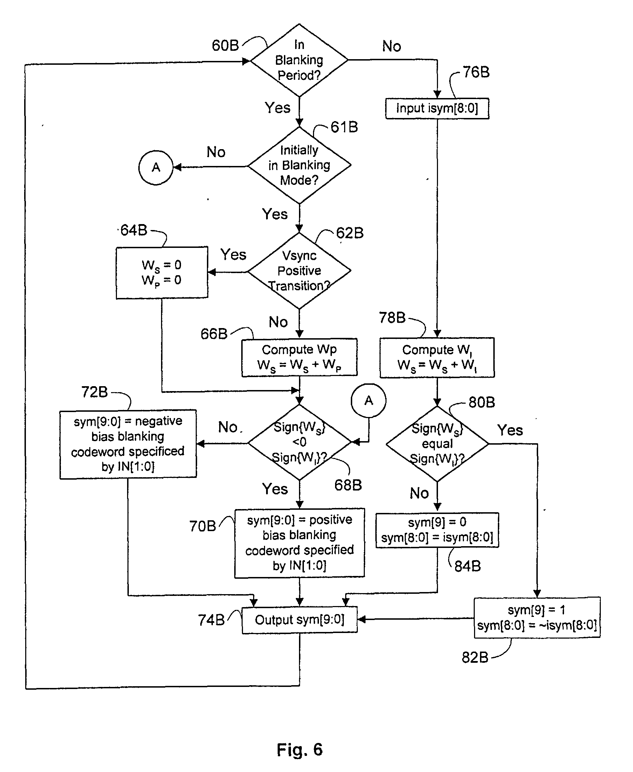

Fig. 6 illustrates a detailed flow diagram of an alternate DC balancing scheme similar to that illustrated in Figs. 4 and 5 in accordance with one embodiment of the present invention. In the illustrated embodiment, the DC balancing scheme determines whether a blanking period is detected as illustrated by diamond 60B. In one embodiment, this scheme can transition between two modes, initialed on the blanking period or not initialed on the blanking period as illustrated by diamond 61 B. If this scheme is initialed in a blanking period, the DC balancing scheme determines whether the last vsync transition was positive as illustrated by diamond 62B. If the last vsync transition was positive, the stream weight, W_{S}, is initialized to 0 immediately after the last positive transition on vsync. In one embodiment, Ws and W_{P} are initialized to zero.

If the last vsync transition was not positive (i.e. last vsync transition was negative), the DC balancing scheme may compute W_{P} and updates W_{S} as illustrated by block 66B. For example, the value for W_{S} may be updated according to W_{S} = W_{S} + W_{P}.

DC balancing scheme determines whether the sign of W_{S} (or the sign of W_{I} if computed) is greater than zero as illustrated by diamond 68B. In one embodiment, if the scheme is not initialized in the blanking period as illustrated by diamond 61B, then blocks 62B, 64B and 66B are optional and may be skipped. If Sign{W_{S}} (or Sign{ W_{I}}) is less than zero (i.e. the sign is positive) then SYM [9:0] is a positive bias blanking code word specified by IN [1:0] provided previously as illustrated by block 70B. If however, Sign{W_{S}} (or Sign{ W_{I}}) is greater than zero (i.e. the sign is positive) then SYM [9:0] = negative bias blanking code word specified by IN [1:0] provided previously as illustrated by block 72B. The DC balancing scheme then outputs the sym [9:0] as indicated by block 74B.

However, if a blanking period is not detected by block 60B, the isym [8:0] is input into the DC balancing scheme as illustrated by block 76B. The DC balancing scheme then determines or computes Wₗ and uses this value to compute or update Wₛ, where Wₛ = Wₛ + Wₗ as illustrated by block 78B. The DC balancing scheme determines whether Sign{Wₛ} is equal to Sign{Wₗ} as illustrated by diamond 80B. If the signs are equal than sym[9] = 1 and sym [8:0] is the inverse of isym[8:0] as indicated by block 82B. The output sym[9:0] is outputted as illustrated by block 74B. However, if Sign{Wₛ} is not equal to Sign{Wₗ} then sym[9] = 0 and sym[8:0] = isym[8:0] as illustrated in block 84. The output sym[9:0] is outputted as illustrated by block 74B.

An alternate video encoding scheme is set out in commonly assigned Non-provisional Application No. 10/034,414 dated December 27, 2001, titled "Video Encoding Scheme Supporting The Transport of Audio and Auxiliary Information" the complete subject matter of which is incorporated herein by reference in its entirety. Furthermore, the audio data may be transmitted during the blanking periods, as described in non-provisional patent application Serial No. 09/951,289 filed September 12, 2001, and non-provisional patent application Serial No. 09/951,671 filed March 9, 2001, which applications are hereby incorporated by reference. The audio data can be transmitted during the blanking periods also as described in other blanking period mechanisms.

Many modifications and variations of the present invention are possible in light of the above teachings. Thus, it is to be understood that, within the scope of the appended claims, the invention may be practiced otherwise than as described hereinabove.

## Claims

1. A method of encoding video comprising:
concatenating at least one data bit onto at least one component of input data; and
balancing said at least one component and said at least one data bit.

2. The method of Claim 1, including communicating said balanced component and said concatenated data bit.

3. The method of Claim 1, including computing at least one CRC bit and concatenating said at least one CRC bit onto said at least one component.

4. The method of Claim 1, including concatenating audio data onto said at least one component.

5. The method of Claim 1, including concatenating auxiliary data onto said at least one component.

6. The method of Claim 1, including concatenating status information onto said at least one component.

7. The method of Claim 1, including detecting pixel errors.

8. The method of Claim 7, further including compensating for said detected pixel errors.

9. The method of Claim 8, wherein compensating comprises keeping a last pixel value.

10. The method of Claim 8, wherein compensating comprises averaging adjacent pixel values.

11. The method of Claim 8, wherein compensating comprises interpolating between prior and next non-errored pixel values.

12. A method of encoding video comprising:
receiving input data;
splitting said input data into at least two components; and
concatenating at least one data bit onto at least one of said components.

13. The method of Claim 12, wherein splitting said input data includes splitting said input data into color pixels.

14. The method of Claim 13, wherein splitting said input data includes splitting said input data into eight bit color pixels.

15. The method of Claim 12, including computing at least one CRC bit.

16. The method of Claim 15, including concatenating said at least one CRC bit onto said at least one of said components.

17. The method of Claim 12, including concatenating audio data onto said at least one of said components.

18. The method of Claim 12, including concatenating auxiliary information onto said at least one of said components.

19. The method of Claim 12, including concatenating status information onto said at least one of said components.

20. The method of Claim 12, including DC balancing said components and said concatenated data bit.

21. The method of Claim 12, including communicating said components having said additional data bit to at least one channel.

22. A method of encoding video comprising:
registering a received input pixel;
splitting said input pixel into a plurality of color components;
concatenating at least one data bit onto said plurality of color components; and
balancing said color components and said concatenated data bit.

23. The method of Claim 22, including communicating said balanced color components and said at least one data bit to at least one communication channel.

24. The method of Claim 22, including computing at least one CRC bit and concatenating said at least one CRC bit onto said plurality of color components.

25. The method of Claim 22, including concatenating audio data onto said plurality of color components.

26. The method of Claim 22, including concatenating auxiliary data onto said plurality of color components.

27. The method of Claim 22, including concatenating status information onto said plurality of color components.
